# EUROPEAN PATENT APPLICATION

(11) **EP 0 924 828 A1**
(43) Date of publication of application: **23.06.1999**
(21) Application number: 98123960.1
(22) Date of filing: 17.12.1998
(51) Int. Cl.: H02G 3/00

(54) **Modular electric installation and relative components**

(30) Priority: 18.12.1997 IT TO971111
(71) Applicant: D'Aloia, Nicola, 15067 Novi Ligure (Alessandria) (IT); RAL ITALIA SCRL, 15067 Novi Ligure (Alessandria) (IT)
(72) Inventor: D'Aloia, Nicola, 15067 Novi Ligure (Alessandria) (IT)
(74) Representative: Robba, Pierpaolo

(57) **Abstract**

There is disclosed a modular electric system easy and quick to be assembled, comprising: a control and managing central unit (1); a plurality of electric modules; a component-carrying module (19) and a plurality of modular connecting means (41) adapted to interconnect the control central unit (1) and the electric modules. The modular connecting means (41) comprises connecting raceways equipped with a plurality of hollow conductors (45) embedded thereinto.

## Description

The present invention relates to a modular electric system as well as to the associated components to realize the same.

In the prior art there are not known electric systems of this type. At present the installing electricians laying such systems accommodate the existing standard components to the typology of a specific plant and connect such components through conductors of several types, usually wires or cables disposed in raceways.

Of course a system of this type properly fits into the place where it has been installed but cannot be employed elsewhere. Moreover problems are encountered when servicing and repairs are requested because of the difficulty to trace the fault and the possible need to replace whole portions of the system.

It is an object of the present invention to solve the above technical problems of the prior art, by providing a modular electric system including a series of suitable standard components that can be interconnected to each other by connecting means that are readily adjustable to different applications, and that can be easily replaced or repaired without impairing the system operation, and with a very low cost since only the portion affected by the fault has to be replaced.

The above and other objects and advantages of the present invention that will become evident from the following description, are accomplished through a modular electric system as claimed in claim 1 and through the associated components thereof as claimed in claims 7 to 10. Claims 2 to 6 are directed to additional non-trivial embodiments of the present invention.

The present invention will be better understood through the description of some exemplary preferred but non limiting embodiments thereof, with reference to the attached drawings in which:
Figure 1 is a cross section view of an embodiment of a central unit to be incorporated in a system according to the invention;
Figure 2 is a electric diagram of the central unit of Fig. 1;
Figure 3 is a cross section view of an embodiment of a control module to be incorporated in a system according to the invention;
Figure 4 is a cross section view of a feeding bus to be incorporated in a system according to the invention.

With reference to the attached Figures a modular electric system in accordance with the present invention comprises a number of components that will be disclosed in detail hereinbelow. Since the interconnections among the components will be clear to a skilled of the art, they will neither be illustrated nor disclosed in detail in the present application.

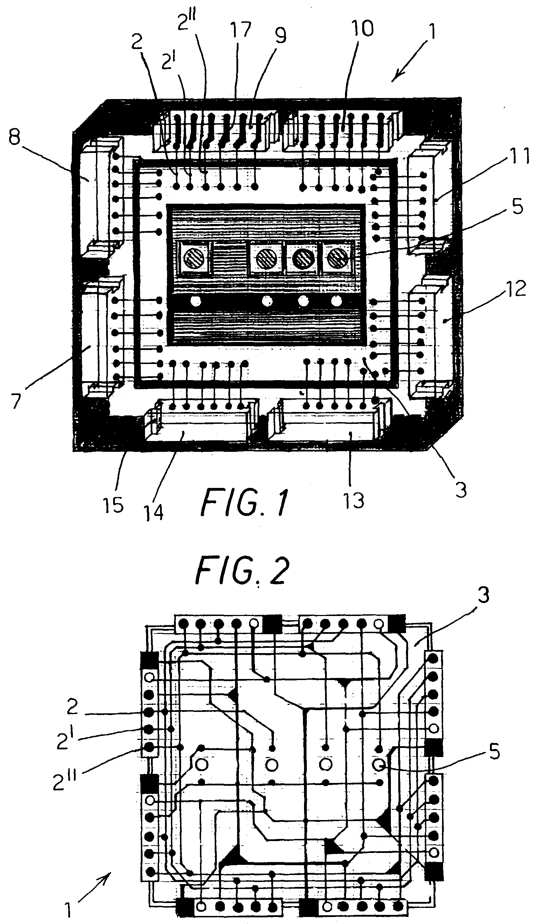

The system according to the invention comprises a control and managing central unit 1 shown in Fig. 1, the electric diagram of which is shown in Fig. 2. Although the illustrated central unit 1 provides for three channels 2, 2', 2'', other arrangements with a different number of channels depending on a selected application are possible.

The central unit 1 houses a printed circuit board 3 provided with a plurality of light emitting devices 5 (LED diodes in the illustrated embodiment), for example for the phase and the three channels. The central unit 1 further comprises eight spaces 7 - 17 housing corresponding connectors (not shown). Each space 7 - 14 is provided with suitable fastening means 15, e.g. a U-shaped guide for making easier the permanent insertion of the connectors. The spaces 7-14 comprises a plurality of pins 17 adapted to fit into corresponding female connectors, i.e. provided with a corresponding plurality of connecting holes.

The central unit 1 controls the channels to which it is connected and feeds all the modules in correspondence of all the points where a voltage is required. The central unit is adapted to feed all the circuits in a standard ways so that no compulsory input is required for the modulation, and allows the coupling of the inputs and the outputs in the most convenient connector.

The modular system of the invention further comprises a plurality of electric modules such as switches, pushbuttons, lamp sockets, voltage outlets, relays, ringers, control units and the like, that will not be illustrated in detail since they are known in the art.

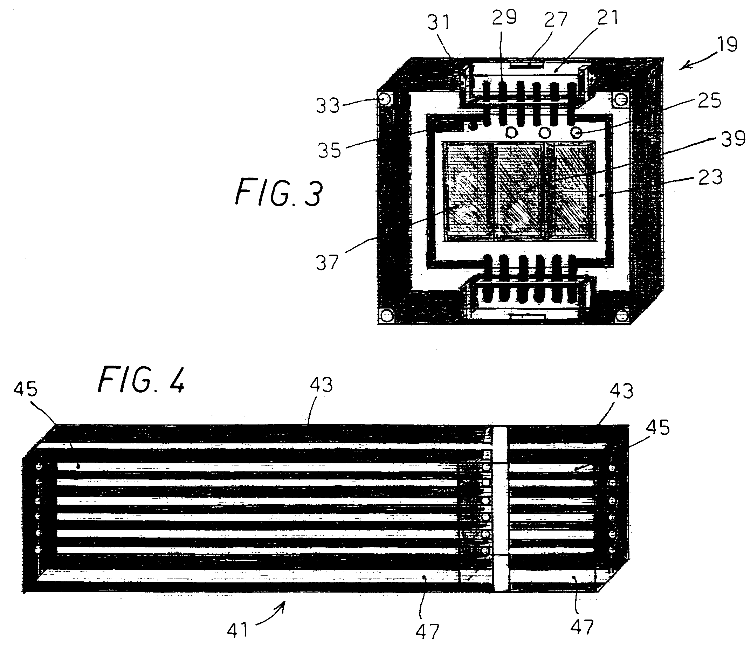

The system of the invention is further provided with a component-carrying module 19 a practical embodiment of which is illustrated in Fig. 3. The component-carrying module 19 comprises a plurality of connecting spaces 21 (two of which are shown in Fig. 3), a printed circuit board 23 adapted to managing the electric modules connected thereto, and a plurality of LEDs or similar devices 25. Each connecting space 21 is provided with a flexible pawl 27 adapted to snap-fastening the electric modules, a multipole male connector 29 and a U-shaped guide recess 31 for engaging the electric modules. The component-carrying module 19 is further provided with a plurality of holes 33 for securing a protection cover (not shown), and a pushbutton 35 to energize the phase control LEDs during the installation, the repair and the servicing of the system. A further space 37 is provided for the components to be connected, and a plurality of switches or single-pole pushbuttons 39 for the connected channels.

The module 19 is the same for all the electric modules that can be employed and comprises a number of conductors that is variable in accordance with the specific application. For securing the module 19 a specific mount (not shown) is preferably used, adapted to allow the removal of module 19 without using any tools, by merely extracting the module from the mount on which it had been fitted through proper means (not shown) located inside it. The above mentioned protection cover closes the unused connectors and further protects against possible accidents by preventing any contact with the connector that is always live.

According to the invention the system further comprises a plurality of modular connecting means 41, e.g. as shown in Fig 4, formed as a feeding bus. The connecting means 41 are adapted to interconnect the central unit 1 with the several electric modules.

In the preferred embodiment, the modular connecting means 41 are in the form of connecting raceways equipped with a plurality of hollow conductors 45 (similar to female elongated cylindrical rods) embedded in the raceways. Due to their particular configuration the connecting means 41 can be cut at any desired point (as shown also in Fig. 4), at a desired length for a given application, and are always ready to accomplish the connecting function.

The connecting means 41 further comprises a plurality of recesses 47 adapted to receive corresponding connectors (not shown) for completing the conductive path. Several types of means and supports (not shown) are provided for supporting the connecting means 41 in accordance with the application in which they are to be used, and for allowing their easy extraction when a replacement or a modification thereof is required. The means 41 are made of a rigid material allowing the fastening of the voltage-carrying bars and their cutting at the desired length without difficulty.

By using the above disclosed components and other components such as connectors, unipolar relays, modular feeding plugs of the central unit, male-to-male adapters for joining the modulation, arcuated feeding lines with the so-called "mammoth" terminal boards, curved lines of various type and other connections, etc., an electric system for any desired type of application can be easily assembled, such system being easily accessible and allowing a quick replacement or repair. Since the above mentioned components are within the knowledge of the skilled in the art, they are not further disclosed in detail.

Summarizing, the system of the present invention can be easily assembled by using raceways and electric modules already provided with inner electric connections. On each side of the module one or more connectors are mounted for connecting the raceways from any point. In order to make safe this process, fastening means such as hooks and pawls are secured to the inside space housing the connectors to prevent the raceway from coming out. Moreover all the modules and the raceways are internally insulated from one another to prevent undesired contacts and shorcircuits.

The size of the modules are selected in accordance with the foreseen application, and the modules can be made of several different materials. By using the concept of the invention, one can build modules having a variable number of channels and several values of the feeding voltages and currents for the use in industrial plants. The modules can be mounted on a wall or a laminate partition wall by means of suitable supporting devices of plastic material provided with a joint or socket for securing the module.

The length and the thickness of the raceways change in accordance with the different models, and they can be cut at the desired length for fitting the system being assembled (without damaging the electric part). These raceways are internally connected so that the working of the system is not jeopardized in cases they are mounted upturned. Moreover they are internally connected and insulated on the basis of the number of channels intended for use.

The main circuit of the system is the central unit 1. It can drive and feed an arbitrary number of channels by actuating or deactuating the pulses from the control modules. A peculiar feature of this central unit resides in that in the input connectors the raceways have not a compulsorily fixed joining for each channel since each connector controls the same number of channels as the central unit 1. It is thus possible to control a channel through any connector. For example, in case a three channels central unit 1 is used, the central unit controlling these channels can be inserted into each of the three connectors to obtain the same command at any desired point. Thus, in case it is desired to use the free channels or to use at several points those channels already employed, the desired module could be joined at any desired location to be activated.

The assembly of the system is quite simple. The modules are secured to the walls at the selected locations, the raceways are cut in accordance with the desired path length and inserted between the modules and the control unit to obtain an already wired and operating system. Since no manual connection is requested, the assembling of a system according to the present invention is very fast even for an unskilled person. In addition to the easiness and the reduced time for assembling the system, a further main advantage of the invention resides in the versatility of use. Namely the location of a plug (or any other module) can be changed through a simple removal and an insertion of the desired module. This operation can be accomplished in any room where the system is located. In the same manner, also in large spaces such as a multi-floor building, the modules of other floors or rooms can be controlled.

Even the maintenance is very simple since the modules are provided with control warning lights allowing a constant monitoring of the system. Thus a possible fault or malfunction is immediately detected.

Although some embodiments of the invention have been illustrated, they can be modified while remaining within the scope of the invention.

## Claims

1. A modular electric system comprising:
- a control and managing central unit (1) comprising a plurality of channels (2, 2', 2'');
- a plurality of electric modules; characterized in that it further comprises a plurality of modular connecting means (41) adapted to interconnect said control central unit (1) and said plurality of electric modules.

2. A modular electric system as claimed in claim 1, characterized in that said modular connecting means (41) comprises connecting raceways incorporating a plurality of cables (45).

3. A modular electric system as claimed in claim 1 or 2, characterized in that said control and managing central unit (1) and said plurality of electric modules are provided with coupling means (17) and fastening means (15, 27) adapted to ensure their coupling to said modular connecting means (41).

4. A modular electric system as claimed in any of the preceding claims, characterized in that it further comprises a component-carrying module (19).

5. A modular electric system as claimed in any of the preceding claims, characterized in that said coupling means (17) comprises pins or male electric connectors and that said modular connecting means (41) comprises cylindrical rods (45) of female type.

6. A modular electric system as claimed in any of the preceding claims, characterized in that said electric modules comprise switches, pushbuttons, lamp sockets, voltage outlets, relays, ringers, and control units.

7. Connecting raceways (41) for use in a modular electric system as claimed in claims 1 to 6, further comprising a plurality of hollow conductors (45) embedded in said raceways.

8. A control and managing central unit (1) for use in a modular electric system as claimed in claims 1 to 6.

9. A component-carrying module (19) for use in a modular electric system as claimed in claims 1 to 6.

10. Electric modules such as switches, pushbuttons, lamp sockets, voltage outlets, relays, ringers and controls units for use in a modular electric system as claimed in claims 1 to 6.
